# FASCICULE DE BREVET EUROPEEN

(11) **EP 1 827 901 B1**
(45) Date de publication et mention de la délivrance du brevet: **07.04.2010**
(21) Numéro de dépôt: 05824513.5
(22) Date de dépôt: 05.12.2005
(51) Int. Cl.: B60P 1/38, B07C 5/02, B65G 47/31

(54) **DISPOSITIF DE DECHARGEMENT D'OBJETS EN VRAC**
VORRICHTUNG ZUM ENTLADEN VON LOSEN OBJEKTEN
DEVICE FOR UNLOADING LOOSE OBJECTS

(30) Priorité: 08.12.2004 FR 0413094
(43) Date de publication de la demande: 05.09.2007
(73) Titulaire: LA POSTE, 75757 Paris Cedex 15 (FR)
(72) Inventeur: BOSSER, Patrick, F-44880 Sautron (FR); CADIC, Christophe, F-44400 Rèze (FR)
(74) Mandataire: Bentz, Jean-Paul
(86) Numéro de dépôt international: PCT/FR2005/003024
(87) Numéro de publication internationale: WO 2006/061495

(56) Documents cités:
- FR-A- 2 593 416
- US-A- 2 847 110
- US-A- 5 407 083
- US-A- 5 558 485
- US-A- 5 803 701
- US-A1- 2002 079 194

## Description

La présente invention concerne un dispositif de déchargement d'objets en vrac d'un véhicule, et plus particulièrement de colis postaux depuis des véhicules équipés de convoyeurs vers un quai de chargement et de déchargement, selon le préambule de la revendication 1, et un système de déchargement selon le préambule de la revendication 8.

Les colis postaux, sous forme de paquets ou cartons de différentes dimensions, ou sacs postaux, sont généralement transportés en vrac dans des camions vers des plates-formes de traitement équipées de trieuse. A ce jour, le chargement des remorques ou semi-remorques de camion est effectué au moyen de convoyeurs télescopiques. Un ou plusieurs opérateurs récupèrent les colis amenés dans la remorque par un convoyeur télescopique et les empilent dans la remorque, le convoyeur étant rétracté au fur et à mesure du remplissage de la remorque. Les colis, majoritairement sous la forme de cartons rectangulaires, sont généralement empilés les uns sur les autres jusqu'au plafond de la remorque par rangées successives. Pour le déchargement des remorques, le convoyeur télescopique est déployé à l'intérieur de la remorque au fur et à mesure qu'elle se vide, et alimente un autre convoyeur pour transporter les colis vers une station de triage. Cette opération de déchargement se révèle relativement longue et fastidieuse pour les opérateurs.

Par ailleurs, il est connu des systèmes de déchargement et chargement comprenant une remorque équipée d'un convoyeur embarqué et un convoyeur fixe disposé sur un quai, au même niveau que le convoyeur embarqué. De tels systèmes sont utilisés uniquement pour le chargement et le déchargement de palettes en un seul passage, avec des convoyeurs à avancement synchronisé. Un tel système est décrit dans le document US 5 803 701.

La présente invention a pour but de pallier les inconvénients précités. A cet effet, la présente invention propose un dispositif de déchargement automatique d'objets en vrac, sans manipulation desdits objets par un opérateur, depuis un véhicule équipé d'un convoyeur embarqué à bande sans fin.

Le dispositif de déchargement automatique d'objets en vrac selon l'invention comprend les charactéristiques de la revendication 1.

Selon un mode de réalisation, ladite unité de contrôle commande l'arrêt du convoyeur embarqué et du convoyeur de déchargement lorsqu'une hauteur seuil est détectée par lesdits moyens de détection, tel qu'un capteur de type émetteur/récepteur, puis la reprise de l'avancement des deux convoyeurs de manière intermittente. L'unité de contrôle commande par exemple un fonctionnement pas à pas des deux convoyeurs sur une durée déterminée lorsqu'une hauteur seuil est dépassée, les deux convoyeurs reprenant automatiquement un fonctionnement continu.

Selon une autre particularité, le dispositif comprend en outre des moyens de distribution pour diriger les objets du convoyeur de déchargement soit vers un premier poste de traitement, tel qu'une station de triage, soit vers un deuxième poste de traitement, tel qu'une station de stockage. Selon un mode de réalisation, les moyens de distribution comprennent un convoyeur transversal à bande sans fin disposé sensiblement transversalement à l'extrémité aval du convoyeur de déchargement, l'unité de contrôle étant apte à commander l'avancement et le sens de transport dudit convoyeur transversal.

Avantageusement, le dispositif de déchargement comprend des moyens de blocage de deux battants arrières du véhicule en position ouverte pour guider les objets en vrac tombant du convoyeur embarqué, et/ou des moyens de détection des deux battants en position ouverte connectés à l'unité de contrôle.

Selon un mode de réalisation, le convoyeur de déchargement est destiné à être disposé sur un quai de chargement et de déchargement de camions, les moyens de positionnement étant formés par un socle disposé sur l'aire de réception des camions à proximité de la paroi verticale du quai, ledit socle permettant le positionnement du véhicule dans une position haute de déchargement dans laquelle le convoyeur embarqué est disposé au-dessus du convoyeur de déchargement, les deux convoyeurs se chevauchant. Avantageusement ledit socle permet également le positionnement du véhicule dans une position basse de déchargement, dans laquelle le convoyeur embarqué et le convoyeur de déchargement sont disposés sensiblement bout à bout et à la même hauteur.

La présente invention propose en outre un système de déchargement comprenant un dispositif de déchargement, tel que décrit précédemment, et un véhicule, tel qu'une remorque ou semi-remorque, équipé d'un convoyeur embarqué disposé de préférence longitudinalement et permettant le déchargement automatique d'objets en vrac par l'arrière.

Avantageusement, ledit véhicule, en particulier une semi-remorque, comprend deux battants verticaux arrières aptes à fermer l'ouverture arrière du véhicule et à guider les objets vers le convoyeur de déchargement en position ouverte, et/ou un volet articulé monté transversalement pivotant au niveau de la paroi avant, au-dessus du rouleau de renvoi amont du convoyeur embarqué, apte à guider les objets en vrac vers le convoyeur embarqué, et/ou des moyens d'appui portés en partie arrière, aptes à coopérer avec les moyens de positionnement.

L'invention sera mieux comprise, et d'autres buts, détails, caractéristiques et avantages apparaîtront plus clairement au courus de la description explicative détaillée qui va suivre d'un mode de réalisation particulier actuellement préféré de l'invention, en référence aux dessins schématiques annexés, sur lesquels :
- la figure 1 représente une vue schématique de dessus d'un système de déchargement selon l'invention ;
- la figure 2 représente une vue schématique de côté du dispositif de déchargement de la figure 1; et,
- les figures 3 et 4 représentent des vues partielles de côté du dispositif de déchargement, illustrant le positionnement du convoyeur embarqué par rapport au convoyeur fixe, respectivement dans la position haute de déchargement et dans la position basse de chargement de la semi-remorque.

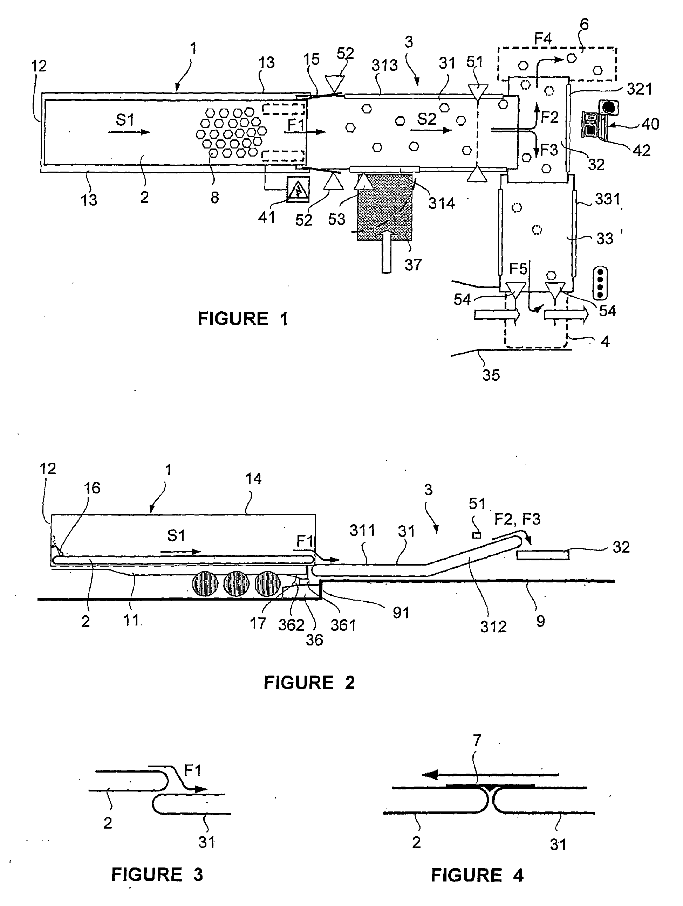

En référence aux figures 1 et 2, le système de déchargement de colis en vrac selon l'invention comprend des véhicules, en particulier des remorques ou des semi-remorques 1, équipés de convoyeur embarqué 2, et un dispositif de déchargement 3 installé sur un quai 9 de chargement et de déchargement de camions.

Le convoyeur embarqué 2, de type à bande sans fin, appelé également tapis roulant, est monté longitudinalement sur le châssis 11 d'une semi-remorque comprenant classiquement une paroi avant 12, deux parois latérales 13 et une paroi formant plafond 14. Le convoyeur forme le plancher de la semi-remorque et permet de décharger les colis 8 par l'arrière, dans le sens de transport S1. L'arrière de la remorque est fermé par deux battants verticaux 15 s'étendant jusqu'au plafond. Un volet articulé 16 s'étend entre les deux parois latérales et est monté transversalement pivotant au niveau de la paroi avant, au-dessus du rouleau de renvoi amont du convoyeur embarqué. Le volet articulé est déplaçable entre une position basse, dans laquelle il forme une rampe de guidage descendante en direction du brin supérieur du convoyeur embarqué, et une position haute illustrée en traits discontinus sur la figure 2, dans laquelle le volet est disposé contre la paroi avant.

Conformément à l'invention, le dispositif de déchargement à quai comprend un convoyeur de déchargement 31 à bande sans fin destinée à recevoir sur son brin supérieur les colis tombant du semi-remorque, tel qu'illustré par la flèche F1, un convoyeur transversal 32 à bande sans fin, disposé horizontalement et transversalement à l'extrémité aval du convoyeur de déchargement. Le convoyeur de déchargement a une largeur au moins égale à celle du convoyeur embarqué 2, de préférence supérieure, et comprend une partie amont sensiblement horizontale 311 et une partie aval inclinée 312 montant dans le sens de transport S2. Le convoyeur transversal, agencé en dessous de l'extrémité aval du convoyeur de déchargement, peut transporter les colis dans deux sens opposés, tel qu'illustré par les flèches F2 et F3. Un convoyeur, dit de triage 6, est disposé à une première extrémité du convoyeur transversal 32 pour diriger les colis vers une station de triage tel qu'illustré par la flèche F4, tandis qu'un convoyeur incliné 33 montant dans le sens de transport est disposé à la deuxième extrémité pour charger les colis dans des conteneurs mobiles 4, tel qu'illustré par la flèche F5. Un système de guidage et de positionnement de conteneurs mobiles 35 peut être prévu à l'extrémité aval du convoyeur incliné 33 pour garantir une position précise des conteneurs lors de leur remplissage.

Un socle de positionnement 36 est prévu à proximité de la paroi verticale 91 du quai pour assurer un positionnement horizontal stable et précis en hauteur et en profondeur de la remorque dans une position haute de déchargement ou dans une position basse de chargement. Comme mieux visible à la figure 3, dans la position haute, le convoyeur embarqué 2 vient se positionner au-dessus du convoyeur de déchargement 31, les deux convoyeurs se chevauchant. Dans la position basse, le convoyeur embarqué et le convoyeur de déchargement sont disposés sensiblement bout à bout et à la même hauteur, tel que représenté à la figure 4. Le châssis de la semi-remorque porte en partie arrière une barre d'appui transversale 17, par laquelle la semi-remorque vient en appui contre une zone d'appui haute et avancée 361 du socle ou contre une zone d'appui basse et reculée 362 du socle, plus éloignée du quai.

Des moyens de blocage (non représentés) sont en outre prévus pour bloquer les battants de la semi-remorque dans la position ouverte illustrée à la figure 1, dans laquelle les battants servent de moyens pour guider les colis 8 en vrac dans leur chute vers le convoyeur de déchargement. Pour éviter toute chute des colis hors des convoyeurs, des rives latérales de guidage 313, 314 , 321, 331 bordent les bords latéraux du convoyeur de déchargement 31 et le convoyeur incliné 33, ainsi que le bord latéral du convoyeur transversal 32 opposé au convoyeur de déchargement. L'une des rives latérales de guidage 314 est montée pivotante de manière à former une porte latérale d'accès au convoyeur de déchargement, au niveau de sa partie amont horizontale 311, via une rampe d'accès inclinée 37, pour permettre le chargement de conteneurs mobiles ou de palettes, par exemple à l'aide d'un dispositif de levage de type transpalette électrique.

Le dispositif comprend une unité de contrôle 40 apte à commander les différents convoyeurs du système de déchargement, à savoir, le convoyeur embarqué dans le sens de transport S1, le convoyeur de déchargement dans le sens de transport S2, le convoyeur transversal dans l'un, des deux sens de transport opposés, et le convoyeur de triage et/ou le convoyeur inclinée. Un boîtier de raccordement électrique 41 disposé à proximité du socle permet le raccordement électrique rapide du convoyeur embarqué à l'unité de contrôle, au moyen d'un simple câble, afin que le convoyeur embarqué puisse être commandé par l'unité de contrôle.

Pour assurer le bon fonctionnement du processus de déchargement, l'unité de contrôle est asservie par différents capteurs. Un capteur de hauteur 51 est disposé au-dessus du brin supérieur du convoyeur de déchargement, de préférence dans sa partie montante aval 312, pour détecter la hauteur de colis sur ledit convoyeur, tel que décrit ci-après. Des interrupteurs 52 sont disposés de part et d'autre de la partie amont du convoyeur de déchargement pour détecter si les battants sont bloqués en position ouverte. Un commutateur d'extrémité 53 signale la position de la porte d'accès et deux capteurs 54 détectent la présence de conteneur à l'extrémité aval du convoyeur incliné. Le dispositif peut comprendre des boutons d'arrêt d'urgence disposés près des convoyeurs permettant de stopper tous les convoyeurs. Ces boutons d'arrêt d'urgence peuvent être complétés par des cordons à tirer s'étendant le long des bords latéraux des convoyeurs.

L'unité de contrôle comprend un panneau de commande 42 comportant divers boutons de commande actionnables par l'opérateur, notamment pour la mise en marche du dispositif et pour la sélection du sens de transport du convoyeur transversal 32, et divers indicateurs visuels représentatifs de l'état des capteurs précités.

Pour le déchargement de colis en vrac 8, la semi-remorque est amenée en marche arrière en position haute sur le socle 36. Pour ce faire, la remorque équipée d'un système de régulation de hauteur connu en soi, est amenée en position relevée au-dessus du socle puis abaissée de manière à venir en appui par sa barre d'appui 17 contre la zone d'appui haute 361 du socle. Après l'établissement de la connexion électrique du convoyeur embarqué 2 au boîtier de raccordement 41, l'ouverture des battants 15 et le verrouillage de ces derniers, l'opérateur fixe le sens de transport du convoyeur transversal 32 pour orienter les colis vers la station de triage ou vers les conteneurs, notamment en fonction de la disponibilité et de la capacité de traitement de la station de triage. L'opérateur commande ensuite la mise en route du processus de déchargement en activant l'unité de contrôle 40. L'unité de contrôle commande la mise en route simultanée du convoyeur embarqué 2, du convoyeur de déchargement 31 et du convoyeur transversal 32, ainsi que le convoyeur de triage 6 ou le convoyeur incliné 33 en direction des conteneurs mobiles 4. En variante, ces deux derniers convoyeurs sont commandés par des systèmes distincts, indépendants de l'unité de contrôle 40. Selon l'invention, les convoyeurs à quai 31, 32, 33 et 6 fonctionnent à des vitesses nettement supérieures à celle du convoyeur embarqué 2, ces vitesses étant gérées par l'unité de contrôle. Les vitesses des convoyeurs à quai sont par exemple sensiblement identiques. A titre d'exemple, le convoyeur embarqué avance à une vitesse comprise entre 0,1 et 1 mètre/minutes (m/min), par exemple de l'ordre de 0,3m/min, tandis que la vitesse des convoyeurs à quai est comprise entre 10 et 50 m/min; par exemple de l'ordre de 20m/min. Les colis 8 en vrac sont transportés à faible vitesse hors de la semi-remorque et tombent sur le convoyeur de déchargement. La vitesse beaucoup plus élevée de ce dernier permet de séparer les colis. Les colis régulièrement répartis sur le brin supérieur du convoyeur de déchargement tombent ensuite sur le convoyeur transversal et sont déversés dans un conteneur 4 via le convoyeur incliné 33 ou conduit vers une station de triage via le convoyeur de triage 6.

Lorsque les colis sont empilés les uns sur les autres jusqu'au plafond, notamment par rangées successives, un nombre important de colis peut s'écrouler simultanément et former des amas de colis sur le convoyeur de déchargement 31. Lorsque le capteur de hauteur 51 détecte une hauteur de colis trop haute sur le convoyeur de déchargement, en raison d'amas de colis superposés, ou de colis trop volumineux, l'unité de contrôle 40 commande l'avancement du convoyeur embarqué 2 et du convoyeur de déchargement 31 de façon intermittente. A titre d'exemple, le capteur de hauteur est un capteur optique de type émetteur /récepteur monté sur les rives de guidage 313, 314, qui détecte une hauteur seuil de colis. Lorsque le capteur de hauteur détecte cette hauteur seuil, l'unité de contrôle arrête le convoyeur embarqué 2 et le convoyeur de déchargement 31, le convoyeur transversal 32 et le convoyeur de triage 6 et/ou le convoyeur incliné 33 continuant de fonctionner en continu. L'unité de contrôle commande alors momentanément le convoyeur embarqué et le convoyeur de déchargement par intermittence pour répartir de manière plus uniforme la charge trop haute sur le convoyeur transversal. Dès que la charge trop haute a été emportée, le convoyeur embarqué et le convoyeur de déchargement reprennent automatiquement un fonctionnement en continu. En variante, le capteur de hauteur détecte la hauteur réelle de l'empilement de colis sur le convoyeur, l'unité de contrôle modulant les vitesses des convoyeurs en fonction des hauteurs détectées.

Dans le cas de la mise en conteneurs des colis, l'opérateur surveille le degré de remplissage du conteneur, les capteurs 54 permettant l'arrêt des convoyeurs lors du remplacement d'un conteneur plein par un conteneur vide. L'opération de déchargement peut reprendre automatiquement lorsque les capteurs détectent un nouveau conteneur 4, de préférence après une temporisation.

Avantageusement, l'opérateur a la possibilité de régler la vitesse d'avancement du convoyeur embarqué 2. En cas de chargement partiel de la semi-remorque, l'opérateur pourra ainsi faire avancer le convoyeur embarqué à plus grande vitesse afin d'accélérer le passage de la partie vide du convoyeur et ainsi assurer un déroulement optimal du flux de colis.

Le système selon l'invention permet ainsi de décharger automatiquement, rapidement et sans efforts, la totalité de la semi-remorque. La possibilité offerte par le dispositif selon l'invention d'envoyer les colis vers des conteneurs mobiles permet d'éviter le blocage de camions à quai, notamment lorsque la station de triage est indisponible. Les parois 12, 13 et 14 de la semi-remorque, ainsi que les battants 15 présentent des faces internes sensiblement lisses, de sorte que les colis puissent glisser librement contre celles-ci. Pour le chargement et déchargement de colis en vrac, le volet 16 est amené en position basse pour guider les colis vers le convoyeur et ainsi éviter que des colis ne restent bloqués entre la paroi avant et le rouleau de renvoi amont du convoyeur embarqué.

Le dispositif selon l'invention peut également être utilisé, sans mise en marche des convoyeurs, pour le chargement de semi-remorque. Pour ce faire, la semi-remorque est positionnée sur le socle en position basse reculée, dans laquelle le convoyeur embarqué et le convoyeur de déchargement sont disposés sensiblement bout à bout, de même niveau. Une plaque de transfert 7 assurera la transition entre les deux convoyeurs. Des palettes ou des conteneurs mobiles peuvent être introduits dans la remorque par la rampe 37. Le volet articulé 16 sera préalablement relevé en direction de la paroi avant 12 dans sa position haute pour libérer de l'espace.

Dans une variante de réalisation, le convoyeur de déchargement peut être logé dans une fosse, de sorte que le brin supérieur soit de niveau avec la surface du quai.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention selon les revendications annexées.

## Revendications

1. Dispositif de déchargement automatique d'objets en vrac, en particulier de colis postaux, depuis un véhicule (1) équipé d'un convoyeur embarqué (2) à bande sans fin, comprenant :
- un convoyeur de déchargement (31) fixe à bande sans fin apte à recevoir les objets en vrac (8) provenant dudit convoyeur embarqué (2),
**caractérisé en ce qu'**il comprend en outre
- des moyens de positionnement (36) d'un véhicule, de sorte que l'extrémité aval du convoyeur embarqué soit disposé au-dessus de l'extrémité amont du convoyeur de déchargement, et
- des moyens de commande comprenant une unité de contrôle (40) apte à commander simultanément les vitesses d'avancement du convoyeur embarqué et du convoyeur de déchargement, de sorte que la vitesse d'avancement du convoyeur de déchargement soit supérieure à celle du convoyeur embarqué,
et **en ce que** lesdits moyens de commande comprennent des moyens de détection (51) de la hauteur d'objets (8) sur le convoyeur de déchargement (31), les vitesses des convoyeurs étant commandées par l'unité de contrôle (40) en fonction de ladite hauteur.

2. Dispositif selon la revendication 1, **caractérisé en ce que** ladite unité de contrôle (40) commande l'arrêt du convoyeur embarqué (2) et du convoyeur de déchargement lorsqu'une hauteur seuil est détectée par lesdits moyens de détection, puis la reprise de l'avancement des deux convoyeurs de manière intermittente.

3. Dispositif selon la revendication 1 ou 2, **caractérisé en ce qu'**il comprend en outre des moyens de distribution (32, 33, 6) pour diriger les objets du convoyeur de déchargement (31) soit vers un premier poste de traitement, tel qu'une station de triage, soit vers un deuxième poste de traitement, tel qu'une station de stockage.

4. Dispositif selon la revendication 3, **caractérisé en ce que** lesdits moyens de distribution comprennent un convoyeur transversal (32) à bande sans fin disposé sensiblement transversalement à l'extrémité aval du convoyeur de déchargement (31), l'unité de contrôle (40) étant apte à commander l'avancement et le sens de transport dudit convoyeur transversal.

5. Dispositif selon l'une des revendications 1 à 4, **caractérisé en ce qu'**il comprend en outre des moyens de blocage en position ouverte de deux battants arrières (15) du véhicule pour guider les objets en vrac tombant du convoyeur embarqué (2), et des moyens de détection (52) des deux battants en position ouverte.

6. Dispositif selon l'une des revendications 1 à 5, **caractérisé en ce que** le convoyeur de déchargement est destiné à être disposé sur un quai de chargement et de déchargement de camions (9), les moyens de positionnement étant formés par un socle (36) disposé sur l'aire de réception des camions à proximité de la paroi verticale (91) du quai, ledit socle permettant le positionnement du véhicule dans une position haute de déchargement dans laquelle le convoyeur embarqué (2) est disposé au-dessus du convoyeur de déchargement (31), les deux convoyeurs se chevauchant.

7. Système de déchargement **caractérisé en ce qu'**il comprend un dispositif de déchargement selon l'une des revendications 1 à 6 et un véhicule (1), tel qu'une remorque ou semi-remorque, équipé d'un convoyeur embarqué (2).

8. Système selon la revendication 7, **caractérisé en ce que** ledit véhicule (1), tel qu'une semi-remorque, comprend deux battants verticaux arrières (15) aptes à fermer l'ouverture arrière du véhicule et à guider en position ouverte les objets (8) vers le convoyeur de déchargement (31).

9. Système selon la revendication 7 ou 8 **caractérisé en ce que** ledit véhicule (1), tel qu'une semi-remorque, comprend un volet articulé (16) monté transversalement pivotant au niveau de la paroi avant (12) du véhicule, au-dessus du rouleau de renvoi amont du convoyeur embarqué (2), apte à guider les objets en vrac (8) vers le convoyeur embarqué.

## Claims

1. Device for automatically discharging loose objects, in particular postal parcels, from a vehicle (1) equipped with an on-board endless belt conveyor (2), comprising:
- a fixed unloading endless belt conveyor (31) able to receive the loose objects (8) coming from the said on-board conveyor (2),
**characterized in that** it additionally comprises
- means (36) for positioning a vehicle, such that the downstream end of the on-board conveyor is arranged above the upstream end of the unloading conveyor, and
- control means comprising a control unit (40) capable of simultaneously controlling the advancing speeds of the on-board conveyor and of the unloading conveyor, such that the advancing speed of the unloading conveyor is greater than that of the on-board conveyor,
and **in that** the said control means comprise means (51) for detecting the height of objects (8) on the unloading conveyor (31), the speeds of the conveyors being controlled by the control unit (40) as a function of the said height.

2. Device according to Claim 1, **characterized in that** the said control unit (40) stops the on-board conveyor (2) and the unloading conveyor when a threshold height is detected by the said detection means, and then resumes the advancing of the two conveyors in an intermittent manner.

3. Device according to Claim 1 or 2, **characterized in that** it additionally comprises distribution means (32, 33, 6) for directing the objects of the unloading conveyor (31) either towards a first processing station, such as a sorting station, or towards a second processing station, such as a storage station.

4. Device according to Claim 3, **characterized in that** the said distribution means comprise a transverse endless belt conveyor (32) arranged substantially transversally to the downstream end of the unloading conveyor (31), the control unit (40) being able to control the advancing and the direction of transport of the said transverse conveyor.

5. Device according to one of Claims 1 to 4, **characterized in that** it additionally comprises means for locking two rear door wings (15) of the vehicle in an open position in order to guide the loose objects falling from the on-board conveyor (2), and means (52) for detecting the two door wings in the open position.

6. Device according to one of Claims 1 to 5, **characterized in that** the unloading conveyor is intended to be arranged on a loading and unloading dock for lorries (9), the positioning means being formed by a base (36) arranged on the reception area for the lorries in the vicinity of the vertical wall (91) of the dock, the said base allowing the positioning of the vehicle in a top unloading position in which the on-board conveyor (2) is arranged above the unloading conveyor (31), the two conveyors overlapping one another.

7. Unloading system, **characterized in that** it comprises an unloading device according to one of Claims 1 to 6 and a vehicle (1) such as a trailer or semi-trailer, equipped with an on-board conveyor (2).

8. System according to Claim 7, **characterized in that** the said vehicle (1), such as a semi-trailer, comprises two rear vertical door wings (15) able to close the rear opening of the vehicle and to guide in the open position the objects (8) towards the unloading conveyor (31).

9. System according to Claim 7 or 8, **characterized in that** the said vehicle (1) such as a semi-trailer, comprises an articulated flap (16) mounted transversally in a pivoting manner in the region of the front wall (12) of the vehicle, above the upstream return roller of the on-board conveyor (2), capable of guiding the loose objects (8) towards the on-board conveyor.

## Patentansprüche

1. Vorrichtung zum automatischen Entladen von losen Objekten, insbesondere von Postpaketen, von einem Fahrzeug (1), das mit einem fahrzeugseitigen Endlosbandförderer (2) ausgestattet ist, enthaltend:
- einen ortsfesten Endlosband-Entladeförderer (31), der die vom fahrzeugseitigen Förderer (2) kommenden losen Objekte (8) aufnehmen kann,
**dadurch gekennzeichnet, dass** sie ferner
- Mittel (36) zum Positionieren eines Fahrzeugs enthält, so dass das hintere Ende des fahrzeugseitigen Förderers über dem vorderen Ende des Entladeförderers zu liegen kommt, sowie
- Steuermittel mit einer Kontrolleinheit (40), die gleichzeitig die Vorschubgeschwindigkeit des fahrzeugseitigen Förderers und die des Entladeförderers so steuern kann, dass die Vorschubgeschwindigkeit des Entladeförderers höher ist als die des fahrzeugseitigen Förderers,
und dass die Steuermittel Mittel (51) zum Erfassen der Höhe der Objekte (8) auf dem Entladeförderer (31) aufweisen, wobei die jeweilige Geschwindigkeit der Förderer je nach der genannten Höhe von der Kontrolleinheit (40) gesteuert wird.

2. Vorrichtung nach Anspruch 1, **dadurch gekennzeichnet, dass** dann, wenn von den Erfassungsmitteln ein Höhenschwellwert erfasst wird, die Kontrolleinheit (40) das Anhalten des fahrzeugseitigen Förderers (2) und des Entladeförderers und danach das intermittierende Fortsetzen des Vorschubs der beiden Förderer steuert.

3. Vorrichtung nach Anspruch 1 oder 2, **dadurch gekennzeichnet, dass** sie ferner Ausgabemittel (32, 33, 6) enthält, um die Objekte vom Entladeförderer (31) entweder zu einer ersten Bearbeitungsstation, wie etwa eine Sortiereinrichtung, oder zu einer zweiten Bearbeitungsstation, wie etwa eine Lagereinrichtung, zu leiten.

4. Vorrichtung nach Anspruch 3, **dadurch gekennzeichnet, dass** die Ausgabemittel einen Endlosbandquerförderer (32) enthalten, der im wesentlichen quer zum hinteren Ende des Entladeförderers (31) angeordnet ist, wobei die Kontrolleinheit (40) den Vorschub und die Förderrichtung des Querförderers steuern kann.

5. Vorrichtung nach einem der Ansprüche 1 bis 4, **dadurch gekennzeichnet, dass** sie ferner Mittel zum Sichern der beiden Heckklappen (15) des Fahrzeugs in Offenstellung enthält, um die vom fahrzeugseitigen Förderer (2) herab fallenden losen Objekte zu führen, sowie Mittel (52) zum Erfassen der Offenstellung der beiden Heckklappen.

6. Vorrichtung nach einem der Ansprüche 1 bis 5, **dadurch gekennzeichnet, dass** der Entladeförderer dazu bestimmt ist, an einer LKW-Lade- und Entladerampe (9) angeordnet zu werden, wobei die Positioniermittel von einem Sockel (36) gebildet werden, der im LKW-Empfangsbereich in der Nähe der senkrechten Wand (91) der Rampe angeordnet ist, wobei der Sockel die Positionierung des Fahrzeugs in einer erhöhten Entladestellung ermöglicht, in welcher der fahrzeugseitige Förderer (2) über dem Entladeförderer (31) angeordnet ist, wobei die beiden Förderer sich überdecken.

7. Entladesystem, **dadurch gekennzeichnet, dass** es eine Entladevorrichtung nach einem der Ansprüche 1 bis 6 und ein Fahrzeug (1), wie etwa einen Anhänger bzw. einen Sattelanhänger, umfasst, das mit einem fahrzeugseitigen Förderer (2) ausgestattet ist.

8. System nach Anspruch 7, **dadurch gekennzeichnet, dass** das Fahrzeug (1), wie etwa ein Sattelanhänger, zwei senkrechte Heckklappen (15) enthält, welche die heckseitige Öffnung des Fahrzeugs verschließen und in Offenstellung die Objekte (8) zum Entladeförderer (31) hinführen können.

9. System nach Anspruch 7 oder 8, **dadurch gekennzeichnet, dass** das Fahrzeug (1), wie etwa ein Sattelanhänger, eine Gelenkklappe (16) enthält, die im Bereich der Frontwand (12) des Fahrzeugs über der vorderen Umlenkrolle des fahrzeugseitigen Förderers (2) quer verschwenkbar gelagert ist und die losen Objekte (8) zum fahrzeugseitigen Förderer hinführen kann.
